## Europäisches Patentamt

(19) **European Patent Office**

Office européen des brevets

(11) Veröffentlichungsnummer: **0 097 892**
**B1**

(12) # EUROPÄISCHE PATENTSCHRIFT

(45) Veröffentlichungstag der Patentschrift:
18.01.89

(51) Int. Cl.⁴: **C 01 F 7/04**

(21) Anmeldenummer: **83105951.4**

(22) Anmeldetag: **18.06.83**

(54) **Verfahren zum hydrothermalen Aufschluss von einen hohen Gehalt an geglühten Aluminiumoxiden aufweisenden chemischen Abfällen und Rückständen.**

(30) Priorität: **28.06.82 DE 3224040**

(43) Veröffentlichungstag der Anmeldung:
**11.01.84 Patentblatt 84/2**

(45) Bekanntmachung des Hinweises auf die Patenterteilung:
**18.01.89 Patentblatt 89/3**

(84) Benannte Vertragsstaaten:
**AT DE FR GB IT NL**

(56) Entgegenhaltungen:
**GB-A- 1 375 808
GB-A- 1 425 349
US-A- 2 244 194
US-A- 3 814 701**

**Gmelins Handbuch der anorganischen Chemie, Band "Aluminium" Teil B (1934), Seite 97
Römpps Chemie-Lexikon Band 1 (1972) Seite 138**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Christophliemk, Peter, Dr., Rudolf-Breitscheid-Strasse 61, D-4000 Düsseldorf 13 (DE)**
Erfinder: **von Laufenberg, Jürgen, Dr., Scheidenmannstrasse 5, D-5657 Haan 1 (DE)**
Erfinder: **Novotny, Rudolf, Dr., Am Rittersberg 14, D-4000 Düsseldorf 13 (DE)**
Erfinder: **Staller, Siegfried, Bendenkamp 16, D-4030 Ratingen 1 (DE)**
Erfinder: **Diekötter, Friedrich-Wilhelm, Dr., Drosselweg 21, D-4018 Langenfeld (DE)**

**Beschreibung**

Die vorliegende Erfindung betrifft die Verwertung spezieller chemischer Abfälle und Rückstände, die einen hohen Gehalt an geglühten Aluminiumoxiden aufweisen, durch hydrothermale Umsetzung mit Natronlauge bei einer Temperatur oberhalb von 180°C zu Natriumaluminat-Lösung und deren Weiterverwendung.

Geglühte Aluminiumoxide finden vielfältige technische Anwendung beispielsweise als Trokken- und Sorptionsmittel, Katalysator bzw. Katalysatorträger oder als Filterhilfsmittel. «Verbrauchte», d.h. verunreinigte, in ihrer Sorptions- oder Katalysatorwirkung erschöpfte oder aus anderen Gründen nicht mehr verwendbare Produkte dieser Art müssen im Regelfall deponiert werden, wobei je nach Art der Beladung bzw. Verunreinigung ggf. sogar noch eine Vorbehandlung oder Lagerung in Sonderdeponien erforderlich ist.

Die Aufgabe der vorliegenden Erfindung ist es daher, ein Verfahren zur ökologisch und ökonomisch sinnvollen Verwertung von chemischen Abfällen und Rückständen, die geglühte Aluminiumoxide enthalten, zu entwickeln, bei dem die vorstehend aufgezeigten Nachteile vermieden werden. Zusätzlich betrifft diese Aufgabenstellung die Erzielung einer möglichst hohen Raum/Zeit-Ausbeute bei einem möglichst geringen Energieaufwand.

Dem Fachmann ist bekannt, dass die Hochtemperaturmodifikationen des Aluminiumoxids chemisch sehr resistent sind. In der Literatur wird ausdrücklich festgestellt, dass insbesondere $\alpha$–$Al_2O_3$ «in Laugen praktisch unlöslich» ist (Gmelins Handbuch der anorganischen Chemie, 8. Auflage, Band «Aluminium», Teil B (1934), Seite 97).

Auch in «Römpps Chemie-Lexikon», 7. Auflage, Band 1 (1972), Seite 138, wird unter dem Stichwort «Aluminiumoxide» bezüglich des $\alpha$–$Al_2O_3$ ausgeführt, dass dieses hexagonal rhomboedrisch kristalline $\alpha$-Oxid – in der Natur als Korund vorkommend – in Säuren und Laugen unlöslich ist.

In der GB-A-1 425 349 wird ein Verfahren zur Rückgewinnung von Aluminium und anderen Metallen aus verbrauchten Hydro-Entschwefelungs-Katalysatoren auf der Basis von Aluminiumoxid beschrieben. Dieses Verfahren umfasst – im Hinblick auf Aluminiumoxid – die folgenden Stufen:

a) Calcinieren des Katalysator-Materials in feuchter Luft bei Temperaturen bis 750°C.

b) Rösten mit NaCl in einer Atmosphäre von feuchter Luft bei Temperaturen im Bereich von 525 bis 925°C, vorzugsweise von 575 bis 825°C.

c) Auslaugen des Röstproduktes mit Wasser, wobei Aluminiumoxid im Rückstand verbleibt.

d) Behandeln des Rückstandes mit einer wässrigen NaOH-Lösung bei Temperaturen von 200 bis 300°C, gegebenenfalls unter einem Druck von 200 bis 300 psig.

e) Zugabe von Wasser und Kochen der Lösung, um weitgehend alle Bestandteile an löslichen Aluminiumsalzen ($NaAlO_2$) in Lösung zu bringen.

f) Filtrieren der erhaltenen Lösung, wobei die Aluminium-Bestandteile in das Filtrat übergehen.

g) Weitere Aufarbeitung des Filtrats zum Aluminiumhydroxid.

Die beim Calcinieren und Rösten angewendeten Temperaturen beeinflussen die Bildung der in Stufe c verbleibenden Aluminiumoxid-Phase: Bei Temperaturen bis einschliesslich 675°C resultiert $\gamma$–$Al_2O_3$, ohne dass Aluminiumoxid in die $\alpha$-Phase überführt wird. Erst bei 725°C resultiert $\alpha$–$Al_2O_3$, dessen Bildung im Rahmen des beschriebenen Verfahrens unerwünscht ist, da die $\alpha$-Phase des $Al_2O_3$ dem Katalysator nicht die erforderlichen katalytischen Eigenschaften verleiht. Auf diese Weise können nach dem beschriebenen Verfahren bei Anwendung einer Calcinier- und Röst-Temperatur von 625°C beispielsweise bis zu 88% bzw. 96% des Aluminiumoxids in eine lösliche Form überführt werden.

Überraschenderweise wurde jedoch nun gefunden, dass unter technisch zu realisierenden Bedingungen und in ökonomischer Weise die in den oben angegebenen Rückständen enthaltenen geglühten Aluminiumoxide (einschliesslich $\alpha$-$Al_2O_3$) mit Natronlaute zu löslichen Produkten des Typs Natriumaluminat umgesetzt werden können. Die Natriumaluminat enthaltende Lösung wiederum kann – je nach Verunreinigung und nach gegebenenfalls erforderlicher Reinigungsoperation – für weitere chemische Umsetzungen verwendet werden.

Gegenstand der Erfindung ist somit ein Verfahren zum hydrothermalen Aufschluss von einen hohen Gehalt an geglühten Aluminiumoxiden aufweisenden chemischen Abfällen und Rückständen mit wässriger Natriumhydroxid-Lösung unter Druck und bei erhöhten Temperaturen sowie anschliessender Abtrennung und gegebenenfalls Filtration der dabei erhaltenen Natriumaluminat-Lösung, welches dadurch gekennzeichnet ist, dass man aluminiumoxidhaltige Abfälle und Rückstände, die einen hohen Gehalt an geglühten Aluminiumoxiden des Typs $\alpha$–$Al_2O_3$ aufweisen, mit wässriger Natriumhydroxid-Lösung einer Konzentration von 20 bis 50 Gew.-% bei Temperaturen im Bereich von 180 bis 250°C und den diesen Temperaturen entsprechenden Drücken von gesättigtem Wasserdampf umsetzt.

Um eine merkliche Auflösung auch des am wenigsten alkalilöslichen geglühten Aluminiumoxids $\alpha$-$Al_2O_3$ in ökonomischer Raum-/Zeit-Ausbeute zu erzielen, sind Reaktionstemperaturen von zumindest etwa 180°C bei Alkalikonzentrationen in der Kontaktlösung von zumindest 20% NaOH erforderlich. Technisch bevorzugt sind erfindungsgemäss jedoch Reaktionstemperaturen im Bereich von 200°C und Alkalikonzentrationen von 30% NaOH: Unter diesen Bedingungen lässt sich beispielsweise pulverförmiges $\alpha$-$Al_2O_3$ in einer Menge von über 10 Gew.-%, bezogen auf den Gesamtansatz, innerhalb etwa 3–4 Stunden praktisch vollständig lösen.

Mit zunehmender Temperatur lässt sich zwar die zum weitgehenden Lösen der geglühten Aluminiumoxide erforderliche Reaktionszeit verkürzen; im Rahmen einer technischen Realisierung sind jedoch Reaktionstemperaturen von maximal 250°C und Alkalikonzentrationen von maximal 50% NaOH in der Kontaktlösung zweckmässigerweise nicht zu überschreiten. Für eine rasche Reaktion ist der aluminiumoxidhaltige Feststoff möglichst feinteilig einzubringen. Das Reaktionsgemisch wird zumindest soweit in Bewegung gehalten, dass der fein suspendierte Feststoff nicht sedimentiert. Nach beendeter hydrothermaler Reaktion wird die entstandene Aluminatlauge bei Vorliegen merklicher Mengen Rückstand je nach vorgesehener Weiterverwendung der Aluminatlauge ggf. filtriert.

Zur Durchführung des erfindungsgemässen Verfahrens können generell alle für hydrothermale Hochdrucksynthesen gebräuchlichen Reaktionsbehälter beziehungsweise Reaktoren wie beispielsweise rotierende oder statische Kessel sowie Rohrreaktoren Verwendung finden.

Im Hinblick auf eine hohe Raum-/Zeit-Ausbeute ist es zweckmässig, die Aluminiumoxid-Komponente im Überschuss einzusetzen, d.h. diese nicht vollständig hydrothermal zu lösen.

Unter «Aluminiumoxid-Komponente» seien im folgenden die einen hohen Gehalt an geglühten Aluminiumoxiden vorzugsweise des Typs $\alpha–Al_2O_3$ aufweisenden chemischen Abfälle und Rückstände verstanden.

In einer bevorzugten Ausführungsform der Erfindung wird die hydrothermale Umsetzung in einem rotierenden, zylindrischen Druckbehälter, der um seine horizontale Achse drehbar gelagert ist, durchgeführt.

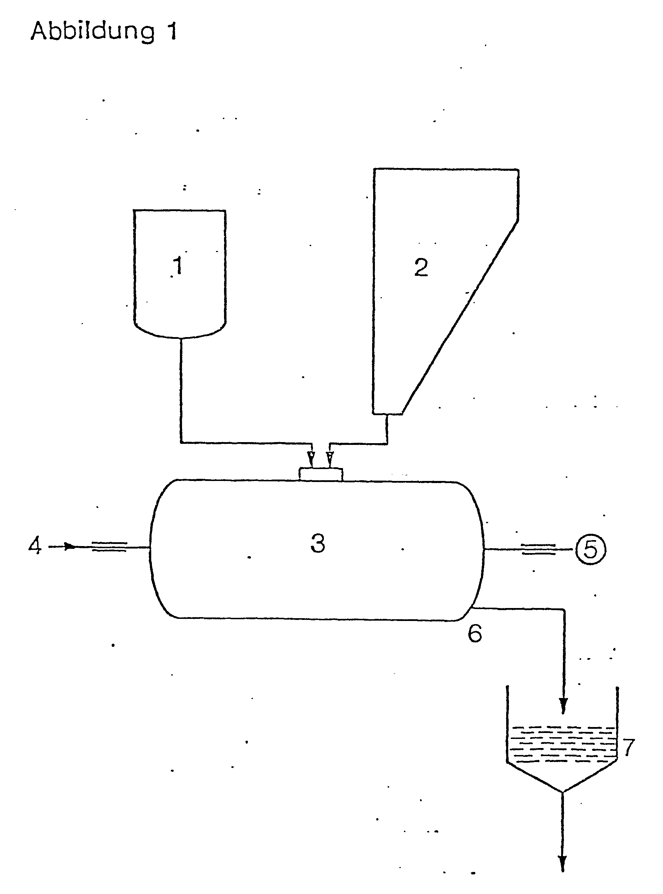

Abbildung 1 zeigt ein beispielhaftes Fliessschema für diese Ausführungsform des erfindungsgemässen Verfahrens. Die angegebenen Ziffern haben die nachstehende Bedeutung:
1 Vorratsbehälter für die wässrige Natronlauge
2 Vorratsbehälter für die Aluminiumoxid-Komponente
3 Reaktionsbehälter
4 Zufuhr für den gesättigten Wasserdampf
5 Antriebsmotor für den Reaktionsbehälter
6 Auslassöffnung für die gebildete Natriumaluminat-Lösung
7 Filter

Die Aluminiumoxid-Komponente und Natronlauge werden chargenweise in den Reaktionsbehälter eingefüllt. Anschliessend wird die wässrige Feststoff/Natronlauge-Suspension im rotierenden Druckbehälter auf die gewünschte Reaktionstemperatur aufgeheizt. Dieses Aufheizen des Reaktionsgemisches kann sowohl indirekt – beispielsweise durch geeignete Heizelemente im Reaktionsbehälter oder Mantelbeheizung desselben – als auch direkt durch Einleiten von Wasserdampf in den Reaktionsbehälter – wie auch im Fliessschema beispielhaft dargestellt – erfolgen. Vorzugsweise wird wegen erhöhter Aufheizgeschwindigkeit dem Reaktionsgemisch gesättigter Wasserdampf bis zum Erreichen der gewünschten Reaktionstemperatur zugeführt, wobei sich gleichzeitig der dieser Temperatur entsprechende Druck des gesättigten Wasserdampfes im Reaktionsbehälter einstellt. Die nachstehende Tabelle zeigt hierzu beispielhaft einige Vergleichswerte zwischen Temperatur und Druck von gesättigtem Wasserdampf:

| Temperatur (°C) | Druck (bar) |
|---|---|
| 150 | 3,8 |
| 160 | 5,3 |
| 170 | 7,0 |
| 180 | 9,3 |
| 190 | 12,0 |
| 200 | 15,0 |
| 225 | 25,0 |

Das Reaktionsgemisch wird solange unter den eingestellten Temperatur/Druck-Bedingungen in dem rotierenden Druckbehälter belassen, bis eine Probe der gebildeten Natriumaluminat-Lösung das Erreichen der erwünschten $Al_2O_3$-Konzentration anzeigt. Die hierfür jeweils erforderlichen Reaktionszeiten lassen sich im allgemeinen im Verlauf einiger weniger Reaktionsabläufe empirisch ermitteln.

Anschliessend wird der rotierende Reaktionsbehälter angehalten und die noch unter Druck stehende oder auf Normaldruck entspannte Natriumaluminat-Lösung auf einen Filter übergeführt und filtriert.

In einer zweiten bevorzugten Ausführungsform der Erfindung wird für die hydrothermale Umsetzung ein statischer Behälter verwendet. Hierbei wird die flüssige Phase des Reaktionsgemisches bei Temperaturen im Bereich von 180 bis 250°C und den diesen Temperaturen entsprechenden Drücken von gesättigtem Wasserdampf solange im Kreislauf durch ein in dem statischen Reaktionsbehälter eingebrachtes, geglühtes Aluminiumoxid enthaltendes Feststoffbett unter Ausbildung einer Wirbelschicht sowie durch eine ausserhalb des Behälters angeordnete Umgehungsleitung gepumpt, bis die $Al_2O_3$-Konzentration in der flüssigen Phase den angestrebten Wert erreicht hat.

Hierbei handelt es sich im wesentlichen um die Ausbildung einer Wirbelschicht des Reaktionsgemisches in der eigentlichen Reaktionszone, in der auf diese Weise ein permanenter und intensiver Stoffaustausch zwischen den Reaktionskomponenten einerseits und der gebildeten Natriumaluminat-Lösung andererseits stattfindet. Die Ausbildung dieser Wirbelschicht bedingt gegenüber konventionellen Hydrothermalverfahren bei sonst gleichen Reaktionsbedingungen und bezogen auf die gleiche Menge eingesetzte Aluminiumoxid-Komponente sowohl eine beträchtliche Verkürzung der Reaktionszeit als auch eine hohe $Al_2O_3$-Konzentration der gebildeten Natriumaluminat-Lösung.

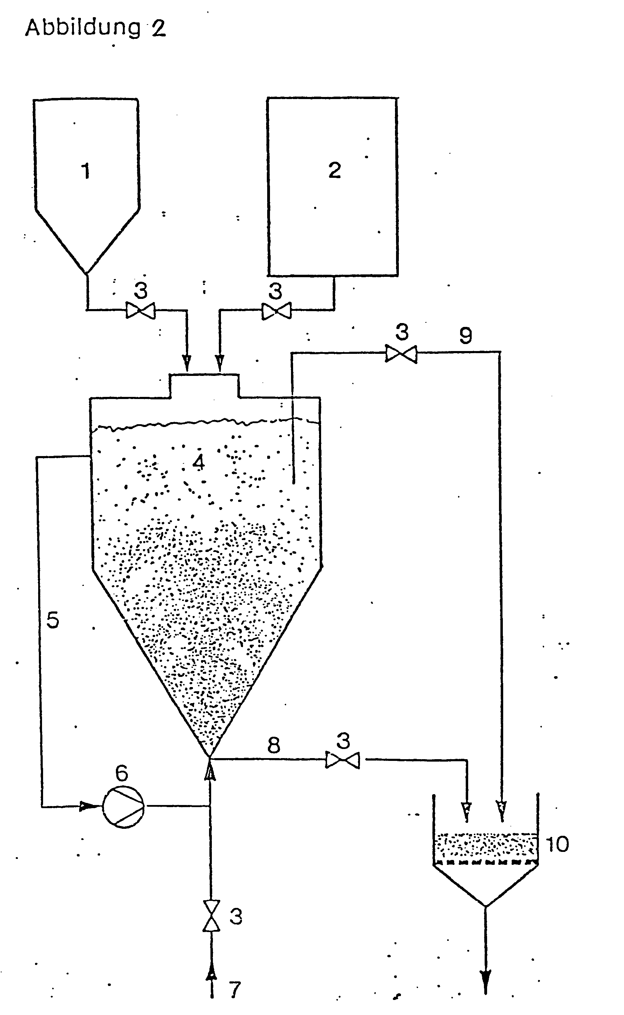

Abbildung 2 zeigt ein beispielhaftes Fliessschema für diese zweite Ausführungsform des erfindungsgemässen Verfahrens. Die hierin angegebenen Ziffern haben die nachstehende Bedeutung:

1 Vorratsbehälter für die Aluminiumoxidkomponente
2 Vorratsbehälter für die wässrige Natronlauge
3 Dosierventile
4 Reaktionsbehälter
5 Umgebungsleitung
6 Pumpe
7 Zufuhr für gesättigten Wasserdampf
8 Rohrleitung zum Entleeren des Reaktionsbehälters
9 Rohrleitung zum Entleeren des Reaktionsbehälters
10 Filter

Zur Durchführung des erfindungsgemässen Verfahrens werden die Aluminiumoxidkomponente und wässrige Natriumhydroxidlösung chargenweise aus den Vorratsbehältern 1 und 2 über geeignete Dosierventile 3 in das als Reaktor dienende statische Druckgefäss 4 eingebracht, wobei sich die Aluminiumkomponente primär in dem unteren – zweckmässigerweise konisch ausgebildeten Teil des Reaktionsbehälters in Form eines Feststoffbettes absetzt. Zur Ausbildung der erfindungswesentlichen Wirbelschicht wird nun dieses Feststoffbett durch ein stetiges Umpumpen der flüssigen Phase des Reaktionsgemisches nach Art eines Wirbelschichtprozesses in Bewegung gebracht und gehalten. Hierbei wird die flüssige Phase im oberen Teil aus dem Reaktionsbehälter abgezogen und durch eine ausserhalb des Behälters angeordnete Umgehungsleitung 5 sowie eine zweckentsprechende Pumpe 6 am unteren Ende des Behälters wieder in diesen eingeführt, so dass dieser Flüssigkeitsstrom stets unter Druck von unten her in das Feststoffbett – beziehungsweise in die bereits ausgebildete Wirbelschicht – einströmt.

Im Sinne der Erfindung ist unter «flüssige Phase des Reaktionsgemisches» im wesentlichen sowohl die eingesetzte wässrige Natronlauge als auch die im Verlaufe der Umsetzung gebildete Natriumaluminat-Lösung zu verstehen, die ferner jedoch auch Anteile der aufgewirbelten Aluminiumoxidkomponente enthalten kann.

Auch bei dieser Ausführungsform erfolgt das Aufheizen des Reaktionsgemisches auf die erforderliche Reaktionstemperatur zweckmässigerweise durch direktes Einleiten von gesättigtem Wasserdampf in den Reaktionsbehälter, wobei man den Wasserdampf mit Vorteil gleichfalls am unteren Ende des Behälters (an Zufur 7 gemäss Abbildung 2) in diesen einführt, um auf diese Weise ein Aufwirbeln des Feststoffbettes im Sinne einer Ausbildung der erfindungswesentlichen Wirbelschicht zu unterstützen. Gegebenenfalls kann das Reaktionsgemisch noch zusätzlich indirekt durch geeignete Heizelemente im Reaktionsbehälter oder eine Mantelbeheizung desselben aufgeheizt werden. Auch die Umgehungsleitung 5 kann gewünschtenfalls mit einem entsprechenden Heizmantel ausgestattet sein. Vorzugsweise wird jedoch dem Reaktionsgemisch gesättigter Wasserdampf bis zum Erreichen der erwünschten Reaktionstemperatur zugeführt, wobei sich gleichzeitig der dieser Temperatur entsprechende Druck des gesättigten Wasserdampfes im Reaktionsbehälter einstellt.

Im Sinne der Erfindung ist es ferner bevorzugt, dass man die Umsetzung bei Temperaturen im Bereich von 180 bis 210 °C und den diesen Temperaturen entsprechenden Drücken von gesättigtem Wasserdampf durchführt. Die Wahl einer relativ niederen Reaktionstemperatur in diesem bevorzugten Temperaturbereich ermöglicht – in Verbindung mit den erfindungsgemäss erzielbaren kurzen Reaktionszeiten – die Durchführung der Hydrothermalsynthese mit einem möglichst geringen Energieaufwand.

Nach Erreichen der erwünschten Reaktionstemperatur wird das Reaktionsgemisch – unter stetigem Umpumpen der flüssigen Phase im Kreislauf – solange unter den eingestellten Temperatur/ Druck-Bedingungen in dem statischen Druckgefäss belassen, bis eine Probe der gebildeten Natriumaluminat-Lösung das Erreichen der erwünschten $Al_2O_3$-Konzentration anzeigt. Die hierfür jeweils erforderlichen Reaktionszeiten lassen sich auch bei dieser Ausführungsform im allgemeinen im Verlauf einiger weniger Reaktionsabläufe empirisch ermitteln.

Nach beendeter Reaktion wird anschliessend die gebildete – noch unter Druck stehende oder auf Normaldruck entspannte – Natriumaluminat-Lösung durch die Leitungen 8 oder 9 auf ein Filter 10 übergeführt.

Diese zweite bevorzugte Ausführungsform eignet sich auch für eine kontinuierliche Verfahrensweise. Dabei wird die gebildete Natriumaluminat-Lösung kontinuierlich aus dem Reaktionsbehälter ausgeführt und die Reaktionskomponente gleichfalls kontinuierlich in denselben nachdosiert. Das Einführen von Aluminiumoxidkomponente und Natronlauge in den statischen Reaktionsbehälter erfolgt hierbei zweckmässigerweise unter Verwendung entsprechender Druckpumpen; die Aluminatkomponente wird vorzugsweise durch ein im Behälter angeordnetes Tauchrohr direkt in den unteren Teil desselben eingeleitet. Die Einhaltung der erwünschten Reaktionstemperatur sowie des Druckes wird durch eine entsprechend gesteuerte – gegebenenfalls kontinuierliche – Zufuhr von gesättigtem Wasserdampf gewährleistet. Nach einer gewissen Anlaufzeit der hydrothermalen Umsetzung, die sich mit Hilfe von Proben der gebildeten Natriumaluminat-Lösung hinsichtlich deren $Al_2O_3$-Konzentration ermitteln lässt, wird die gewonnene Natriumaluminat-Lösung – vorzugsweise über die Leitung 9 – kontinuierlich aus dem Reaktionsbehälter abgezogen und auf das Filter übergeführt.

In einer weiteren bevorzugten Ausführungsform der Erfindung wird zur Abtrennung der nach dem Verfahren der Erfindung erhaltenen Natriumaluminat-Lösung durch Filtration ein Feststoff-Filter verwendet. Als Filtermedium für dieses Feststoff-Filter wird im Sinne der Erfindung vorzugsweise die bereits zur Umsetzung verwendete überschüssige Aluminiumoxidkomponente aus der beendeten Hydrothermalsynthese, gegebenenfalls im Gemisch mit überschüssiger Aluminiumoxidkomponente aus einer der vorangegangenen chargenweisen Umsetzungen oder «frischer», d.h. noch nicht hydrothermal behandelter Aluminiumoxidkomponente eingesetzt. Zur Bereitung des Feststoff-Filters wird zuerst der sich im unteren Teil des Reaktionsbehälters absetzende überschüssige Feststoff auf das Filterbett übertragen. Gegebenenfalls noch im Reaktionsbehälter verbliebene Aluminiumoxidkomponente kann für die nachfolgende Umsetzung in diesem belassen oder aber zur Bereitung des Feststoff-Filters für eine der nachfolgenden Chargen verwendet werden.

Das Feststoffbett des Filters wird mit Vorteil vor dem Aufbringen der zu filtrierenden Natriumaluminat-Lösung durch eine von unten anströmende, im Kreislauf geführte geringe Menge an Flüssigkeit – beispielsweise Wasser oder gegebenenfalls Natriumaluminat-Lösung – in einer Weise aufbereitet, dass die Feinanteile der eingestellten Aluminiumkomponente an die Oberfläche des Filterbettes geschwemmt werden und somit eine hinreichend wirksame Filterschicht ausbilden.

Erfindungsgemäss ist es ferner bevorzugt, die zur Filtration verwendete Aluminiumoxidkomponente des Filterbettes anschliessend in das Verfahren zurückzuführen und so – einschliesslich der dieser Aluminiumoxidkomponente anhaftenden Natriumaluminat-Lösung – für die nachfolgende Umsetzung erneut einzusetzen. Dementsprechend hat es sich bei der Durchführung der Filtration als besonders vorteilhaft erwiesen, die noch heisse, unter Druck stehende Aluminatlösung auf das Feststoff-Filter aufzugeben, da hierbei die Aluminiumoxidkomponente für die nachfolgende Umsetzung bereits vorgeheizt und der Wärmegehalt der heissen Aluminatlösung in Energie sparender Weise optimal genutzt wird. Auf diese Weise können einerseits die nach den gebräuchlichen Verfahren unumgängliche Beseitigung des Filtermaterials entfallen sowie andererseits beträchtliche Energiemengen im Rahmen der gesamten Verfahrensführung eingespart werden.

Aus der beim Verfahren der Erfindung erhaltenen Aluminatlauge kann auf unterschiedliche Weise beispielsweise Aluminiumhydroxid ausgefällt werden. Ökonomischer ist jedoch wegen des hohen Alkaligehaltes der Aluminatlauge deren direkte Verwendung z.B. als Aluminatkomponente zur Herstellung von Aluminiumsilikaten, insbesondere und bevorzugt von zeolithischem Natriumaluminiumsilikat des Typs NaA.

Für die erfindungsgemässe hydrothermale Umsetzung sind solche geglühte Aluminiumoxide enthaltende Massen bevorzugt, die noch andere aluminiumhaltige Komponenten und/oder Alkaliträger enthalten, da letztere dann ohne Vorbehandlung und in vollem Umfang genutzt werden. Die z.B. für die Filtration von Aluminatlaugen verwendeten Filterhilfsmittel auf Aluminiumoxid-Basis stellen derartige besonders geeignete Massen dar, da sie noch erhebliche Restmengen an Natriumaluminat, Aluminiumhydroxiden und Natronlauge neben den geglühten Aluminiumoxiden enthalten. Derartige «verbrauchte» Filterhilfsmittel müssten sonst aufwendig behandelt und deponiert werden, erbringen bei erfindungsgemässer hydrothermaler Reaktion jedoch zusätzliche Wertgehalte.

In den nachfolgenden Beispielen, die – soweit nicht anders vermerkt – in der vorstehend beschriebenen Weise durchgeführt wurden, wird die Auswirkung des erfindungsgemässen Verfahrens hinsichtlich Reaktionsdauer und erforderlichen Reaktionstemperaturen anhand von Daten aufgezeigt.

Beispiele

Die folgenden Beispiele wurden in grosstechnischem Massstab durchgeführt.

Als erfindungsgemäss zu verwertende Aluminiumoxid-Komponente wurde ein für die Filtration von Aluminatlösungen verwendetes Filterhilfsmittel auf Basis $\alpha$–$Al_2O_3$ eingesetzt. Dieses «verbrauchte» feuchte Filterhilfsmittel enthielt noch erhebliche Anteile anhaftender Aluminatlauge. Der Feststoffgehalt (bestimmt durch 1stündiges Glühen bei 800°C) betrug 75,5%; röntgenfluorizenzanalytisch wurde der $Na_2O$-Gehalt auf 7,5% und der Gesamt-$Al_2O_3$-Gehalt auf 68% bestimmt. Von dieser Gesamtmenge $Al_2O_3$ liess sich der Anteil an $\alpha$–$Al_2O_3$ auf etwa 62%, der Anteil an $Al_2O_3$ aus anderen Komponenten (wie Natriummetaaluminat und/oder Aluminiumhydroxid) auf etwa 6% analytisch bestimmen. Der suspendierte Feststoff wies einen Anteil Teilchen < 10 µm von über 90% auf.

Beispiel 1

Als Reaktionsgefäss diente ein waagerecht angeordneter zylindrischer Druckbehälter mit einem Leervolumen von 24 m³, der um seine horizontale Achse drehbar gelagert war. Die Beheizung wurde hierbei durch direktes Einleiten von gesättigtem Wasserdampf in den Druckbehälter vorgenommen. Die Drehzahl des rotierenden Reaktors betrug 6 Umdrehungen pro Minute.

| | |
|---|---|
| Füllmenge, insgesamt | 17,3 t |
| Aluminiumoxid-Komponente (feucht) | 5,2 t |
| Natronlauge (50 gew.-%ig) | 7,4 t |
| Wasser | 4,7 t |
| Laugenkonzentration: | 30 Gew.-% |
| Reaktionstemperatur: | 200°C |
| Reaktionsdauer | 3 Stunden |

Die nach der angegebenen Reaktionsdauer gebildete Natriumaluminatlösung wurde über ein Feststoff-Filter unter Verwendung der nicht umgesetzten Aluminiumoxid-Komponente filtriert.

Die so erhaltene Lösung enthielt 13,4% $Al_2O_3$.

Beispiel 2

Die Durchführung dieses Beispiels erfolgte in einem zylinderförmigen, vertikal angeordneten statischen Druckgefäss mit einem Leervolumen von 3,6 m³, das in seinem unteren Teil konisch ausgebildet und mit einer der vorstehenden Beschreibung entsprechenden Umgehungsleitung ausgestattet war. Die Beheizung erfolgte durch direktes Einleiten von gesättigtem Wasserdampf am unteren Ende des Druckbehälters.

Füllmenge, insgesmt 4,8 t
Aluminiumoxide-Komponente (feucht) 1,5 t
Natronlauge (50 gew.-%ig) 2,0 t
Wasser 1,3 t
Laugenkonzentration: 30 Gew.-%
Reaktionstemperatur: 200 °C
Reaktionsdauer: 2 Stunden

Die nach der angegebenen Reaktionsdauer gebildete Natriumaluminatlösung wurde über ein Feststoff-Filter unter Verwendung der nicht umgesetzten Aluminatoxid-Komponente filtriert.

Die so erhaltene Lösung enthielt 14,1% Al$_2$O$_3$.

## Patentansprüche

1. Verfahren zum hydrothermalen Aufschluss von einen hohen Gehalt an geglühten Aluminiumoxiden aufweisenden chemischen Abfällen und Rückständen mit wässriger Natriumhydroxid-Lösung unter Druck und bei erhöhten Temperaturen sowie anschliessender Abtrennung und gegebenenfalls Filtration der dabei erhaltenen Natriumaluminat-Lösung, dadurch gekennzeichnet, dass man aluminiumoxidhaltige Abfälle und Rückstände, die einen hohen Gehalt an geglühten Aluminiumoxiden des Typs α–Al$_2$O$_3$ aufweisen, mit wässriger Natriumhydroxid-Lösung einer Konzentration von 20 bis 50 Gew.-% bei Temperaturen im Bereich von 180 bis 240 °C und den diesen Temperaturen entsprechenden Drücken von gesättigtem Wasserdampf umsetzt.

2. Verfahren nach Anspruch 1, dadurch gekennzeichnet, dass man die Umsetzung bei Temperaturen im Bereich von 180 bis 210 °C, insbesondere bei Temperaturen im Bereich von 200 °C durchführt.

3. Verfahren nach Ansprüchen 1 und 2, dadurch gekennzeichnet, dass man wässrige Natriumhydroxid-Lösung einer Konzentration von 25 bis 40 Gew.-%, insbesondere von 30 Gew.-% verwendet.

4. Verfahren nach Ansprüchen 1 bis 3, dadurch gekennzeichnet, dass die Aluminiumoxid-Komponente im Überschuss eingesetzt wird.

5. Verfahren nach Ansprüchen 1 bis 4, dadurch gekennzeichnet, dass die Aluminiumoxid-Komponente in feinteiliger Form verwendet wird.

6. Verfahren nach Ansprüchen 1 bis 5, dadurch gekennzeichnet, dass man die Umsetzung in einem rotierenden, zylindrischen Druckbehälter, der um seine horizontale Achse drehbar gelagert ist, durchführt.

7. Verfahren nach Ansprüchen 1 bis 5, dadurch gekennzeichnet, dass man die Umsetzung in einem statischen Behälter in Wirbelschicht durchführt.

8. Verfahren nach Ansprüchen 1 bis 5 und 7, dadurch gekennzeichnet, dass man die Umsetzung kontinuierlich durchführt.

9. Verfahren nach Ansprüchen 1 bis 8, dadurch gekennzeichnet, dass man die erhaltene Natriumaluminat-Lösung durch ein Feststoff-Filter filtriert, das die bereits zur Umsetzung verwendete überschüssige Aluminiumoxidkomponente aus dem beendeten hydrothermalen Aufschluss – gegebenenfalls im Gemisch mit überschüssiger Aluminiumoxidkomponente aus einer der vorangegangenen chargenweisen Umsetzungen oder noch nicht hydrothermal aufgeschlossenen Aluminiumoxidkomponente – enthält.

10. Verfahren nach Anspruch 9, dadurch gekennzeichnet, dass die zur Filtration verwendete Aluminiumoxidkomponente des Filterbettes nach der Filtration einschliesslich der daran haftenden Natriumaluminat-Lösung in das hydrothermale Aufschlussverfahren zurückgeführt wird.

11. Verfahren nach Ansprüchen 9 und 10, dadurch gekennzeichnet, dass man die noch heisse, unter Druck stehende Aluminat-Lösung aus dem hydrothermalen Aufschluss auf das Feststoff-Filter aufgibt.

## Claims

1. A process for the hydrothermal disintegration of chemical wastes and residues having a high content of calcined aluminium oxides with aqueous sodium hydroxide solution under pressure at elevated temperature and with subsequent separation and optionally filtration of the sodium aluminate obtained, characterized in that aluminium-oxide-containing wastes and residues having a high content of calcined aluminium oxides of the α–Al$_2$O$_3$ type are reacted with aqueous sodium hydroxide solution having a concentration of 20 to 50% by weight at temperatures of from 180 to 250 °C and under saturated steam pressures corresponding to those temperatures.

2. A process as claimed in Claim 1, characterized in that the reaction is carried out at temperatures in the range from 180 to 210 °C and more particularly at temperatures of the order of 200 °C.

3. A process as claimed in Claims 1 and 2, characterized in that aqueous sodium hydroxide solution having a concentration of from 25 to 40% by weight and more particularly 30% by weight is used.

4. A process as claimed in Claims 1 to 3, characterized in that the aluminium oxide component is used in excess.

5. A process as claimed in Claims 1 to 4, characterized in that the aluminium oxide component is used in finely divided form.

6. A process as claimed in Claims 1 to 5, characterized in that the reaction is carried out in a rotating, cylindrical pressure vessel mounted for rotation about its horizontal axis.

7. A process as claimed in Claims 1 to 5, characterized in that the reaction is carried out in a fluidized bed in a static vessel.

8. A process as claimed in Claims 1 to 5 and 7, characterized in that the reaction is carried out continuously.

9. A process as claimed in Claims 1 to 8, characterized in that the sodium aluminate solution obtained is filtered through a solid filter containing the excess aluminium oxide component already used for the reaction from the completed hydrothermal treatment, optionally in admixture with excess aluminium oxide component from one of the preceding batch-type reactions or aluminium oxide component which has not yet been hydrothermally treated.

10. A process as claimed in Claim 9, characterized in that, after filtration, the aluminium oxide component of the filter bed used for filtration, including the sodium aluminate solution adhering thereto, is returned to the hydrothermal treatment process.

11. A process as claimed in Claims 9 and 10, characterized in that the aluminate solution issuing under pressure and still hot from the hydrothermal treatment is applied to the solid filter.

**Revendications**

1. Procédé de décomposition hydrothermique de déchets chimiques et de résidus possédant une teneur élevée en oxyde d'aluminium calciné par une solution aqueuse d'hydroxyde de sodium sous pression et à température élevées ainsi que par séparation supséquente et éventuellement filtration de la solution d'aluminate de sodium ainsi obtenue, caractérisé en ce que les déchets et les résidus contenant de l'oxyde d'aluminium qui possèdent une teneur élevée en oxydes d'aluminium calcinés du type $Al_2O_3$ α son convertis avec une solution aqueuse d'hydroxyde de sodium d'une concentration allant de 20 à 50% en poids, à une température dans la zone allant de 180 à 250°C et aux pressions correspondant à ces températures de vapeur d'eau saturée.

2. Procédé selon la revendication 1, caractérisé en ce que l'on effectue la conversion à des températures dans la zone de 180 à 210°C, en particulier à des températures dans la zone de 200°C.

3. Procédé selon les revendications 1 et 2, caractérisé en ce que l'on utilise une solution aqueuse d'hydroxyde de sodium d'une concentration à 25 à 40% en poids, en particulier de 30% en poids.

4. Procédé selon les revendications 1 à 3, caractérisé en ce que les composants à base d'oxyde d'aluminium sont mis en œuvre en excès.

5. Procédé selon les revendications 1 à 4, caractérisé en ce que le composant à base d'oxyde d'aluminium est utilisé sous forme de fines particules.

6. Procédé selon les revendications 1 à 5, caractérisé en ce que la conversion est effectuée dans un récipient sous pression rotatif de forme cylindrique qui tourne sur son axe horizontal.

7. Procédé selon les revendications 1 à 5, caractérisé en ce que l'on opère la conversion dans un récipient statique en couche tourbillonnaire.

8. Procédé selon les revendications 1 à 5, et 7, caractérisé en ce que l'on effectue la conversion d'une manière continue.

9. Procédé selon les revendications 1 à 8, caractérisé en ce que l'on filtre la solution d'aluminate de sodium obtenue à travers un filtre à substances solides qui contient déjà les composants à base d'oxyde d'aluminium en excès utilisés pour la conversion à partir de la décomposition thermique terminée, le cas échéant en mélange avec les composants à base d'oxyde d'aluminium en excès provenant d'une des conversions effectuées charge par charge précédemment ou bien avec des composants à base d'oxyde d'aluminium pas encore décomposés hydrothermiquement.

10. Procédé selon la revendication 9, caractérisé en ce que le composant à base d'oxyde d'aluminium utilisé pour la filtration, du lit de filtration est ramené après la filtration, y compris la solution, d'aluminate de sodium qui lui est adhérende, dans le processus de décomposition hydrothermique.

11. Procédé selon les revendications 9 à 10, caractérisé en ce que l'on remet la solution d'aluminate de sodium encore chaude, se tenant sous pression, provenant de la décomposition hydrothermique, sur le filtre à substances solides.

## Abbildung 1

Abbildung 2